Europäisches Patentamt

European Patent Office

Office européen des brevets

(19)

(11) Publication number: **0 242 493 B1**

# EUROPEAN PATENT SPECIFICATION

(12)

(45) Date of publication of patent specification: **09.10.91**

(51) Int. Cl.⁵: **A23F 5/08, A23F 5/24, A23F 3/16, A23F 5/44**

(21) Application number: **86830191.2**

(22) Date of filing: **03.07.86**

(54) **Process for the preparation of a drink based on alimentary vegetable extracts and drink so obtained.**

(30) Priority: **18.04.86 IT 2014586**

(43) Date of publication of application:
**28.10.87 Bulletin 87/44**

(45) Publication of the grant of the patent:
**09.10.91 Bulletin 91/41**

(84) Designated Contracting States:
**AT BE CH DE FR GB LI LU NL SE**

(56) References cited:
**DE-B- 1 037 828**
**GB-A- 367 517**
**GB-A- 1 169 586**
**GB-A- 1 489 166**
**GB-A- 2 006 603**

(73) Proprietor: **Musetti, Achille**
**Via dell'Abbondanza, 32**
**Piacenza(IT)**

(72) Inventor: **Musetti, Achille**
**Via dell'Abbondanza, 32**
**Piacenza(IT)**

(74) Representative: **Pizzoli, Pasquale et al**
**c/o Società Italiana Brevetti Via G. Carducci 8**
**I-20123 Milano(IT)**

## Description

The present invention has as its object a new process for obtaining drink based on alimentary vegetable extracts and the drink obtained by means of such a process.

The vegetable products that can be treated according to the process of the invention can be as various as possible, starting from coffee, tea, cocoa, which are those more in use at present, to other vegetables, which, even in lower extent, are also utilized rather frequently, such as roasted barley seeds, chicory, dried figs, as well as aromatic and officinal herbs and seeds, and finally Java jute (karkadé) and mate.

The process according to the invention allows to extract the aromatic components from each of these products, simulataneously getting a liquid, which, among the various advantages, possesses a steady taste and ameliorated organoleptic characteristics.

The above mentioned liquid can be utilized exactly the same or mixed with another liquid, which can be defined as lacing liquid. In the particular case of coffee a possible lacing is that consisting in the addition of milk or similar products such as products based on milk proteins as specified hereinafter.

Because of the great number of vegetable products that can be treated by means of the process according to the invention, in the present description reference will be solely made, and only for illustrative aim, to the typical case of coffee and more particularly to the preparation of "cappuccino".

The above mentioned drink is well-known as a hot drink based on coffee generally strong, with a little milk.

It is known that the above mentioned drink at present does not show constant organoleptic characteristics, either when it is prepared by the personnel of a public place or when it is supplied by an automatic distributor machine. In fact in the former case the "cappuccino" is extemporaneously prepared by the personnel, who confines himself to adding to coffee a little quantity of hot milk, without mixing up again the obtained mixture. It is evident that the ratio between the amount of coffee and that of milk cannot always be the same and the ways by which milk is added to coffee are also variable. Therefore the obtained drink changes as to the taste and the organoleptic characteristics according to circumstances and frequently the consumer does not find a constant and always satisfying taste.

In the above mentioned latter case of supplying by automatic distribution machines, there are the same disadvantages above complained of. In fact, it must first of all be taken into consideration that in such machines the liquid milk has been substituted by milk reformed from milk powder just at the moment when the drink is prepared or by a suspension, always prepared extemporaneously, of formulations based on milk proteins with different sugars and lipids. Therefore also in this case the preparation of "cappuccino", and more precisely that of milk, happens extemporaneously with possibility of variations in the supplied doses, so that the supplied drink can show changeable organoleptic characteristics and taste, disagreeable to the consumer.

A further disadvantage of the traditional technique is due to the fact that the grinding of roasted coffee beans causes an inevitable increase of temperature, however this grinding is made, e.g. roller grinding, hammer grinding, millstone grinding and likewise. The increase of temperature can induce a change in the components of coffee, accompanied by the production of compounds that negatively and unpleasantly affect the taste and aroma of the powders obtained through grinding. This aspect will be precisely defined hereinafter.

A further disadvantage is the fact that the drink obtained through the traditional methods shows the formation of sediments of undissolvable particles, which makes its consumption unpleasant.

An aromatic drink, particularly a coffee product, is known from GB-A-2 006 603 published on May 10, 1979. This document discloses a process for the preparation of "admixtures" of soluble coffee with finely ground roasted coffee. This latter is prepared by using an impact mill provided with means for air classification. Air classification in this case is used exclusively for selecting coffee particles having a required size. Accordingly, in the process of GB-A-2 006 603, the finely ground coffee is not modified, by air classification, in its composition. The above document discloses in fact the selection of the coffee particles having a size suitable to permit their addition to soluble coffee particles. The final product thus obtained is still a soluble coffee. Air classification is carried out according to a "quantitative" and not "qualitative" criterion with the relevant disadvantages.

A first important drawback resides in the fact that the process of GB-A-2 006 603 is not able to improve the organoleptic characteristics of the components in order to obtain a final product having a pleasant and pure taste.

Another important disadvantage is due to the fact that solid parts are always present in the final product, i.e. in the liquid coffee. Consequently the above product is frequently unwanted to the consumer.

Now has been conceived, and it is the object of the present invention, a process for the preparation of drinks based on alimentary vegetable extracts, which allows all the above mentioned disadvantages to be overcome.

Object of the present invention is also a drink obtained by means of the mentioned process.

Therefore, one of the main aims of the present invention is to furnish a process by means of which it is possible to prepare a drink like that mentioned above, having organoleptic characteristics definitely improved with respect to the drinks got in the traditional way. That involves the noteworthy advantage consisting in the fact that such a drink shows a pleasant and, above all, constant taste.

Another aim of the invention is to provide a process by means of which the yield from the drink preparation, namely the extraction of aromatic compounds from vegetable products, is clearly increased so that the drink got in such a way shows a taste and an aroma reproducing unchanged the organoleptic characteristics of the starting product.

Another aim of the invention is to offer the possibility of treating dried or roasted vegetable products without altering their organoleptic characteristics. In the specific case of coffee it has been particularly noticed that the formation of derivatives from the activation of sulphydrylic compounds of the present thiocompounds is controlled, as in the process according to the invention the traditional grinding has been replaced by an operating phase which causes no rise in the temperature of coffee. Moreover, this phase eliminates from the obtained liquid the phenomena of sediment of undissolved particles.

According to the invention the total yield of the preparation of the drink is also increased, as the starting vegetable product is subdivided into particles of particularly small size with an average diameter of some micrometers. This allows to obtain the same drinks of the customary processes, still with the above mentioned advantages, employing a smaller quantity of those substances, even lower than that normally used in the traditional extraction processes.

The drink prepared according to the process of the invention is also sterilized, consequently becoming a long lasting and long preservable drink which keeps unchanged its own characteristics also at room temperature.

The fact that the drink results to be of the type of long preservation is accompanied by the further advantage that it does not present any phenomena of sediment of insoluble particles, especially because, during the preparation of the drink, the exhausted particles, i.e. those from which the aromatic principles have been completely extracted, are rapidly separated from the obtained liquid, which has completely absorbed such principles.

The above mentioned characteristics and the other ones which will be later evidenced, will more clearly appear from the following detailed description of a non-limiting embodiment of the process according to the invention, which shows how a "cappuccino" is prepared. It is however evident that the same process with similar modalities can be applied to other vegetable products dried and roasted for obtaining other drinks.

Among the enclosed figures:

FIGURE 1 is a photograph taken by an electronic scanning microscope of the micronized coffee according to the first operating step of the process according to the invention;

FIGURE 2 is a photograph taken like Fig. 1 of coffee powder obtained through traditional grinding;

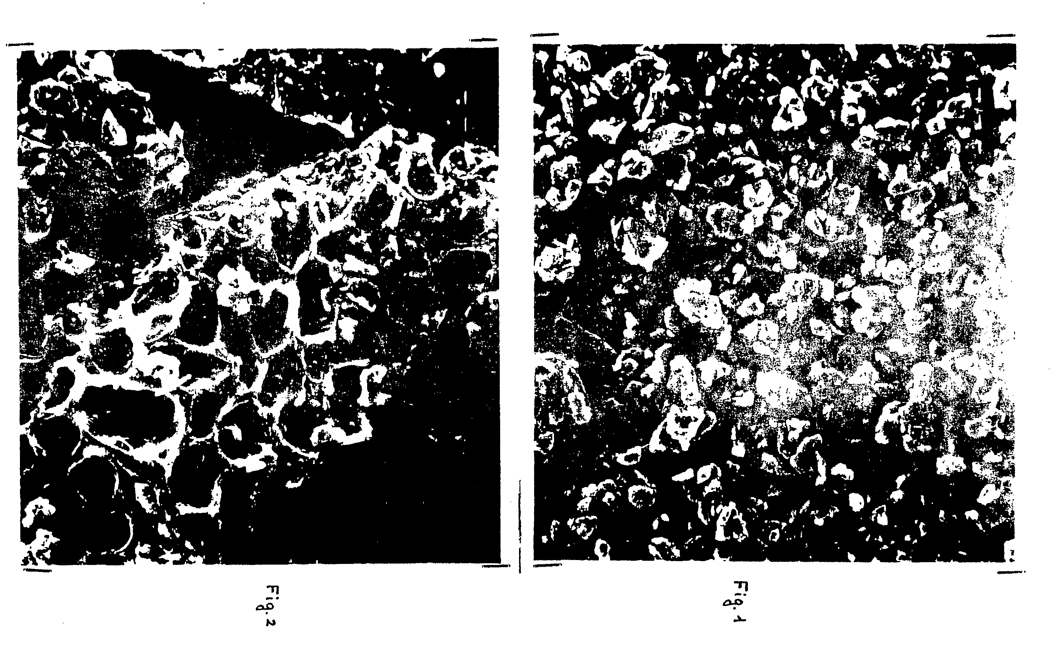

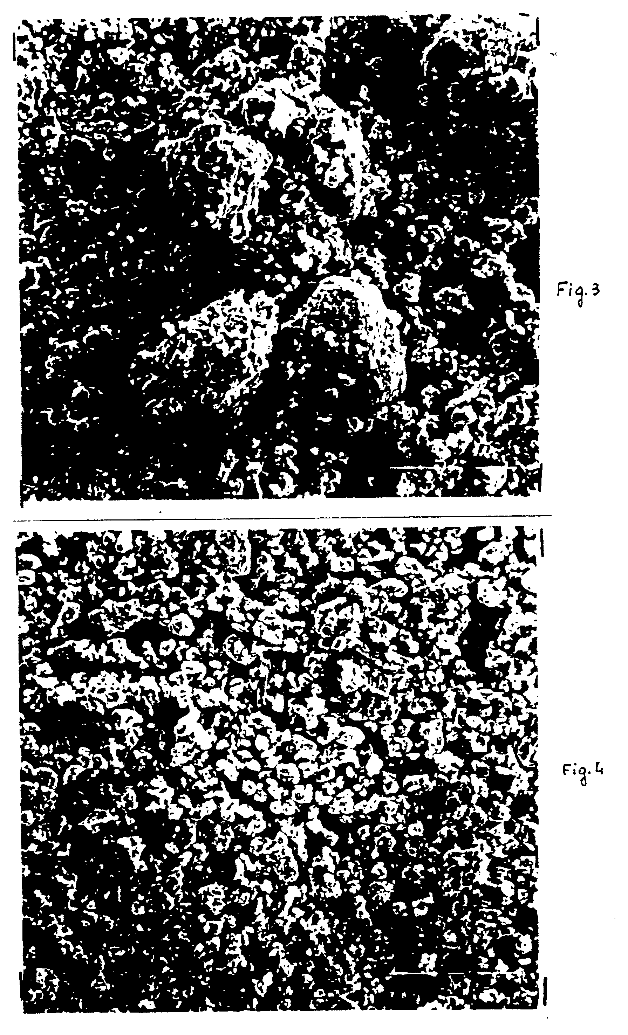

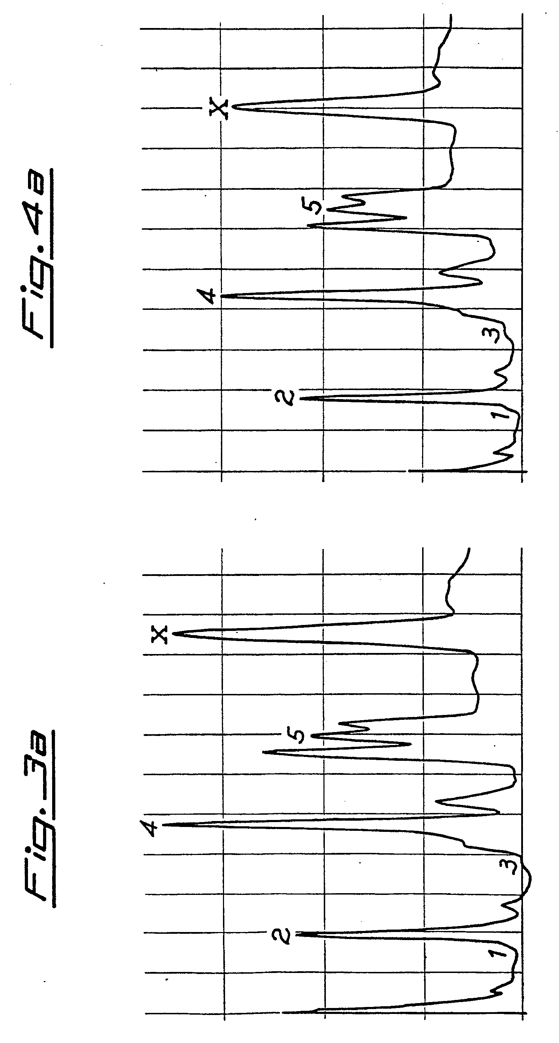

FIGURES from 3 to 5 are photographs likewise taken by an electronic microscope of coffee micronized according to the invention, having decreasing granulometry from Fig. 3 to Fig. 5;

FIGURES 3a, 4a and 5a represent the chromatographic diagrams of the carbonylic short-chain compounds drawn from liquid coffee at 37° C obtained from the coffee powder represented in Figs. from 3 to 5 respectively;

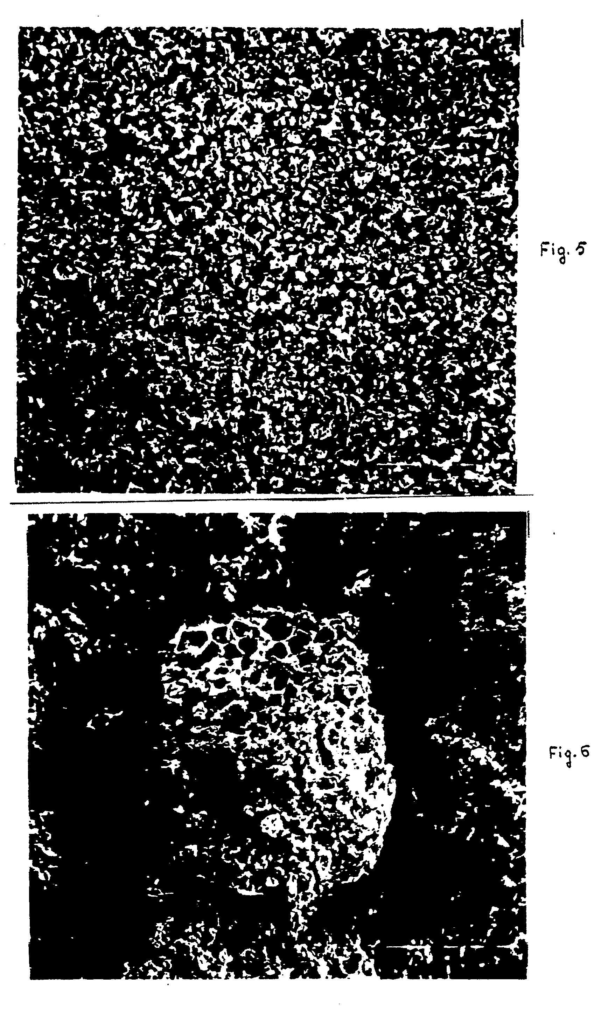

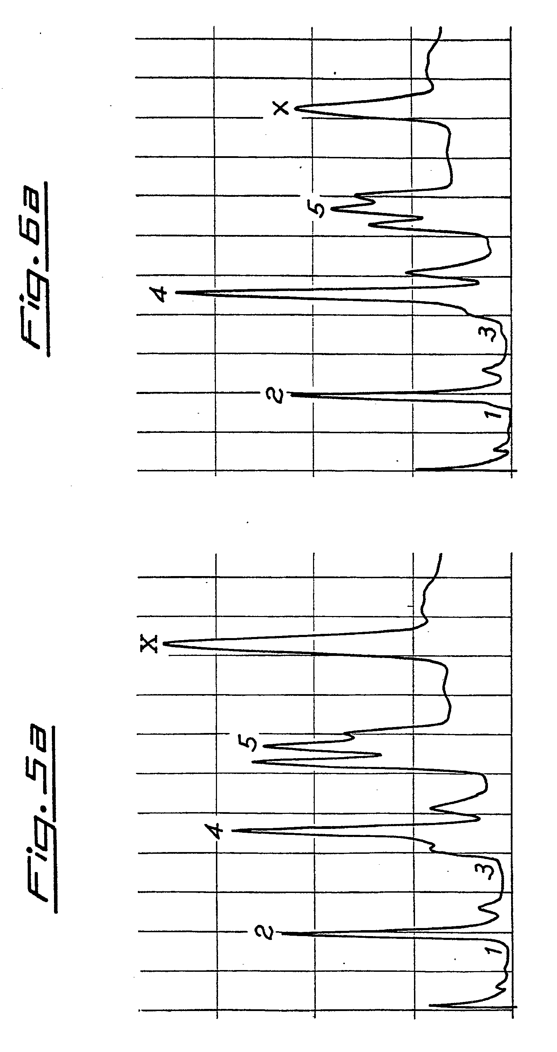

FIGURE 6 is a photograph taken by the electronic microscope of coffee powder obtained through traditional grinding; and

FIGURE 6a represents the chromatographic diagram of the carbonylic short-chain compounds drawn from liquid coffee at 37° C obtained from the coffee powder represented in Fig. 6.

The Figures have been taken with an enlargement (30 times) larger than that of the photographs from 3 to 6. In particular, the enlargement of the photographs 1 and 2 has a value of 1800, while that of other photographs is equal to 60.

The process according to the invention provides a first operating step during which the traditional grinding of roasted coffee is replaced by its micronization, through which a crushing of the beans into more elementary particles (i.e. of much smaller granulometry) is obtained. Indeed, it can be seen from the examination of Figures 1 and 2, which respectively represent micronized coffee according to the invention and coffee ground according to the traditional technique, that in the micronized coffee the structure of the roasted bean is completely demolished into very small elementary particles. Through the traditional grinding process said structure can still be notably seen in the obtained powder.

The coffee ground by means of a micronization process gives the following remarkable advantages.

Firstly the micronized coffee presents in comparison with the ground coffee a larger contact surface with the solvent (e.g. water) and therefore allows to obtain a better extraction of the aromatic principles.

Furthermore, grinding by means of micronization does not cause any raising in the temperature, as it happens in the case of the traditional grinding, and therefore controls the transformation of the compounds of coffee forming compounds with active sulphydrylic groups, which have an unpleasant influence on the taste and on the aroma of the obtained powder and therefore of the final drink. From this point of view, when the operating phases for obtaining liquid coffee will be described it will be useful to have reference to the chromatographic diagrams contained in Figures from 3a to 6a.

The micronization or powdering step (as e.g., the turbomilling) is coupled to an air classification process. In this way it is possible to obtain the disaggregation of the structure of the vegetable tissues of coffee bean. From that very small particles result, of the size of a few micronmeters, with different physical characteristics according to the type of component which characterizes them. It is so possible, according to the characteristics to be given to the powder designed for the subsequent steps, to separate fractions having different physical characteristics and, obviously, to eliminate the unwanted ones. In this case, e.g., the cellulosic fractions are separated.

It is furthermore to be noted that, also in the air classification step, no increase in the temperature happens.

The coffee powder obtained by means of micronization and treated through air classification is then submitted to the following operation step of the process according to the invention, through which the aromatic principles of coffee are extracted from the micronized powder. Such an extraction is carried out under pressure in autoclave at temperatures higher than 100°C, e.g., at a pressure of 1.7 atm = 166,713.05 Pa = 1.667. bar ≃ 1.67 bar with a temperature of 115°C for 5 min. The solvent used in this case will be water, considering that the final drink we want to obtain is cappuccino. However, for other drinks the solvent could be any alimentary solvent.

In this operating step the combined action of pressure and temperature, together with the fact that the contact surface with the solvent is increased (micronization of coffee bean), allows to obtain a highly pleasant coffee taste with a more than sufficient intensity level employing of a quantity of powder equal or lower than half that usually employed in the traditional extraction systems by filtration or by means of express coffee machine or others.

The suspension obtained at the end of the preceding step, formed by liquid coffee where the exhausted elementary particles are in dispersion, that is those from which the aromatic principles have been extracted, is submitted to the following step of the process according to the invention by which the liquid coffee is completely separated from the said exhausted particles.

The above mentioned aim is reached by submitting to centrifugation said suspension. The operating speed of this step can even be not high, e.g. a few thousands rmp, e.g. 4,000 rpm. The exhausted particles of micronized coffee, for their itself very small granulometry, become compact during centrifugation allowing the separation of the coffee drink from said particles. This result is achieved as the cellulosic fractions, having a lower specific gravity, have been separated from the others and removed in one of the preceding steps of the process, and particularly through the air classification.

The separation of the exhausted coffee powder from liquid coffee is therefore carried out at the end of the centrifugation by means of a mere decantation, eliminating all the filtering operations, which are necessary when coffee powder is subdivided in coarser particles, as it happens with the traditional grinding.

From the above it is evident that separation of coffee from the micronized powders by means of centrifugation turns out extremely advantageous because the obtained liquid is fully free from phenomena of deposits of undissolvable particles and therefore the obtained coffee presents itself, from this point of view, agreable for use. Moreover, the elimination of the undissolved particles favours the subsequent operations of the process as well as the mixing with milk or other liquid formulations.

The liquid coffee obtained by centrifugation, as above explained, can obviously be used as it is and, thanks to the absence of dregs It can be packaged into suitable containers after submission to a sterilizing treatment. In this way it becomes a long-preservable or long lasting drink, which shows steady taste and aroma owing to the absence of secondary extraction phenomena on any substances present in the dregs, which during time undergo phenomena of lytic and oxidative nature.

Moreover, if the size of the particles of micronized coffee is particularly fine, e.g. with diameter of less than some micronmeters, it is possible to obtain an extract, which can in its turn be lyophilised, so being fit for preparing instantaneously soluble coffee powder.

The organoleptic characteristics of the liquid coffee obtained according to the invention show the above mentioned advantages, deriving in particular from the thinness of the particles of coffee powder and from the quick removal of the dregs at the end of the centrifugation step. Therefore it appears in the obtained coffee a different composition of the short-chain carbonylic compounds evidenced by the examination of their chromatographic diagrams reported in Figures from 3a to 6a with reference also to Figures from 3 to 6.

The chromatographic spectra reported in Figures from 3a to 6a appear in fact to be different one from another and will be briefly commented upon hereinafter. The data given by such diagrams are anyway confirmed by the opinion on the organoleptic characteristics of some types of coffee obtained in the traditional way and through the process according to the invention, stated by a group of tasters, who expressed a clear preference for coffee obtained according to the invention, which corresponds to Figures from 3 to 5, and a clearly lower appreciation for coffee obtained in the traditional way, which corresponds to the coffee powder represented in Figure 6. More particularly, the appreciation index for coffee according to the invention increased with the increase of the fineness of coffee powders, so that the greatest appreciation was expressed for coffee obtained from coffee powder corresponding to the representation of Figure 5, that is to that with the greatest degree of micronization.

Considering now Figures from 3a to 6a, it is to be stated beforehand that they are chromatographic diagrams of the short-chain carbonylic compounds taken with the "head space" technique from liquid coffee at 37° C.

The gas-chromatographic examination of the "head-space" has been carried out for all diagrams of Figures from 3a to 6a by means of DANI equipment (mod.6800).

15 g of coffee extract, after addition of 5 g NaCl, have been thermostated at 37° C and kept at this temperature for 60 minutes.

A column with the diameter of 2 mm and a length of 2 m, filled with silanized (60-80) mesh Q Poropack, has been employed; the nitrogen stream has been kept at 30 ml/min at a programmed temperature of 100 to 180° C with a gradient of 6° C/min.

The detector temperature (FID) and that of the injector have been kept at 200° C.

In the diagrams the points or peaks 1, 2, 3, 4, 5, respectively means the elution positions of methyl alcohol, acetaldehyde, ethyl alcohol, acetone and propionaldehyde, diacetyl. All these compounds are present in coffee aroma, which is given, however, by a mixture of 363 compounds, 131 of which are acylic, 73 are isocylic (16 of which having a non-aromatic ring and 57 having an aromatic ring) and 159 heterocyclic.

The above mentioned elution peaks correspond to acyclic compounds and particularly to alcohols, aldehydes and ketones having short chain, which may be not well separated from each other in the elution conditions. Practically the peaks may also represent the mixture of many compounds, as e.g. the peak No.4 corresponding as regards the elution speed both to acetone and to propionaldehyde.

Even if it is not easy to give a complete description of the composition of the compounds determining the aroma of coffee of the different types of powder obtained through micronization or grinding, chiefly owing to their high number, as above specified, the limitations of the enclosed diagrams are not large and in any case they are such as to not prevent from seeing that in the case of micronized coffee (Figs. from 3a to 5a) there is a larger extraction of the compounds having a comparatively long chain, as the peaks from 1 to 4 are not so prevailing as in the case of coffee powder obtained through grinding with the traditional systems (Fig. 6a). A further confirmation of this interpretation comes from the progressive relative raising of the peak signed with X, while considering more finely ground powders. In the last analysis it may be concluded that the traditional grinding system has a negative influence upon the aromatic characteristics of the drink, so confirming the opinion of the above mentioned tasters' panel.

It may thus be inferred that, only considering the example of coffee, it is possible to obtain through the process according to the invention a wide range of drinks, all having organoleptic characteristics as to result pleasant to consumer. Such characteristics can also be modified, varying for instance, the type and the concentration of the alimentary solvent used in the step of extraction of the aromatic principles.

It is evident, however, that what has been above described for the case of coffee may be extended also to other vegetable products, as above specified, from which it is possible to obtain the same variety of drinks by means of the process according to the invention.

As above described, the liquid coffee obtained from roasted micronized coffee, separated from the exhausted powder by means of centrifugation, is submitted to a sterilizing step which makes it long preservable. This latter step can be also carried out afterwards, after adding to liquid coffee some milk, which can be natural milk or powdered milk reformed in order to obtain a "cappuccino" or, finally, can be mixed with a dispersion of a formulation based on milk proteins in order to obtain a drink similar to cappuccino but with different characteristics, as it is specified hereinafter.

The above mentioned formulation can be composed of sodium caseinate, lipids, sugars and thickening or suspending substances, as e.g. alginates. This formulation allows to lace the taste of coffee in a completely similar way as it is by using natural or reformed milk.

The formulation based on sodium caseinate presents better characteristics than milk in order to overcome the thermal treatment of sterilization. In fact it does not contain any serum proteins rich in aminoacids with sulphydryl groups, which cause to milk the taste "cooked" when it is submitted to the thermal treatment. Moreover, sodium caseinate does not give rise to the phenomena of insolubility shown by serum proteins.

Finally it is to be noted that in the said formulation, unlike in milk, no calcium phosphates are present, which become insoluble during the thermal treatment, as e.g. tricalcium phosphate, and cause deposits in processing plants and in containers.

The variety of drinks which can be obtained according to the invention is widened by the possibility of enriching the above described formulation with nutrative components, as e.g. non-thermolabile vitamins, or can be changed in its lipid or sugar composition. Through these variations a dietetic drink is consequently obtained.

From what is above described the advantages of the process according to the invention appear evident as it follows to obtain a large range of drinks as a consequence both of the starting vegetable materials and of the solvents or of the lacing substances employed. Further advantages come from the constancy of the organoleptic characteristics of the different drinks, which make them particularly agreable to consumer.

## Claims

1. Process for preparing a drink based on vegetable extracts, characterized in that the starting vegetable product, suitably dried or roasted, is submitted to the following operating steps:
   1) micronization of said vegetable product through crushing of the same in consequence of the disaggregation of the structure of tissues to the obtainment of a powder formed by particles of very thin granulometry;
   2) air classification of said powder to obtain a subdivision of the particles which constitute the powder, according to their physical characteristics thus removing fractions e.g. cellulose particles, of a lower specific gravity.
   3) dispersion under pressure of said particles in a suitable solvent in order to carry out the extraction of the aromatic principles of the vegetable product;
   4) centrifugation of the dispersion obtained in the preceding step and separation of the obtained liquid from the exhausted elementary particles;
   5) mixing of the liquid obtained in the previous step with a lacing liquid formulation;
   6) sterilization of the mixture obtained in the previous step.

2. Process according to claim 1, characterized in that a process of impact shattering is used for micronizing the vegetable product.

3. Process according to claim 1, characterized in that in the air classification step some fractions of particles having different physical characteristics are separated from the others and eliminated.

4. Process according to claim 1, characterized in that centrifugation is carried out at a substantially reduced speed.

5. Process according to claim 4, characterised in that the rotation speed is of a few thousand revs per min.

6. Process according to claim 1, characterized in that the liquid obtained from centrifugation easily separates from the dregs body composed of the exhausted elementary particles of the starting product.

7. Process according to claim 1, characterized in that the extraction of the aromatic principles is carried out into an autoclave.

8. Process according to claim 1, characterized in that the solvent used for extracting under pressure the aromatic principles is water.

9. Process according to claim 8, characterized in that the extraction of the aromatic principles by means of water happens into an autoclave at a temperature higher than 100° C.

10. Process according to claim 1, characterized in that the liquid obtained at the end of the centrifugation step is coffee.

11. Process according to claim 10, characterized in that coffee is mixed with milk.

12. Process according to claim 11, characterized in that milk is natural or powdered and reformed.

13. Process according to claim 10, characterized in that coffee is mixed with a formulation based on milk proteins.

14. Process according to claim 13, characterized in that the formulation based on milk proteins is a formulation composed of sodium caseinate, lipids, sugars, thickening or suspending substances.

15. Process according to claim 13, characterized in that the formulation contains non-thermolabile vitamins.

## Revendications

1. Procédé de préparation d'une boisson à base d'extraits végétaux, caractérisé en ce que le produit végétal de départ, correctement séché ou torréfié, est soumis aux phases de traitement suivantes :

    1) Micronisation dudit produit végétal par broyage de ce dernier, provoquant la désagrégation de la structure des tissus en vue d'obtenir une poudre formée de particules de très faible granulométrie ;

    2) Classification pneumatique de ladite poudre en vue d'obtenir une subdivision des particules constituant la poudre, en fonction de leurs caractéristiques physiques, éliminant ainsi les fractions, telles que les particules de cellulose, de plus faible densité.

    3) Dispersion sous pression desdites particules dans un solvant adéquat en vue d'effectuer l'extraction des principes aromatiques du produit végétal ;

    4) Centrifugation de la dispersion obtenue lors de la phase précédente et séparation du liquide obtenu des particules élémentaires résiduaires ;

    5) Mélange du liquide obtenu lors de la phase précédente avec une formulation liquide d'addition ;

    6) Stérilisation du mélange obtenu lors de l'étape précédente.

2. Procédé selon la revendication 1, caractérisé en ce qu'un broyage par impact est utilisé pour la micronisation du produit végétal.

3. Procédé selon la revendication 1, caractérisé en ce que, dans l'étape de classification pneumatique, certaines fractions de particules présentant des caractéristiques physiques différentes sont séparées des autres et éliminées.

4. Procédé selon la revendication 1, caractérisé en ce que la centrifugation est effectuée à une vitesse considérablement réduite.

5. Procédé selon la revendication 4, caractérisé en ce que la vitesse de rotation est de quelques milliers de tours par minute.

6. Procédé selon la revendication 1, caractérisé en ce que le liquide obtenu par centrifugation se sépare aisément des dépôts composés des particules élémentaires résiduaires du produit de départ.

7. Procédé selon la revendication 1, caractérisé en ce que l'extraction des principes aromatiques s'effectue dans un autoclave.

8. Procédé selon la revendication 1, caractérisé en ce que le solvant utilisé pour l'extraction sous pression des principes aromatiques est l'eau.

9. Procédé selon la revendication 8, caractérisé en ce que l'extraction des principes aromatiques au moyen de l'eau se déroule dans un autoclave à une température supérieure à 100°C.

10. Procédé selon la revendication 1, caractérisé en ce que le liquide obtenu lors de la phase de centrifugation est du café.

11. Procédé selon la revendication 10, caractérisé en ce que le café est mélangé avec du lait.

12. Procédé selon la revendication 11, caractérisé en ce que le lait est naturel ou reconstitué à partir de lait en poudre.

13. Procédé selon la revendication 10, caractérisé en ce que le café est mélangé avec une formulation à base de protéines du lait.

14. Procédé selon la revendication 13, caractérisé en ce que la formulation à base de protéines du lait est une formulation composée de caséinate de sodium, de lipides, de sucres, de substances épaississantes ou d'agents de suspension.

15. Procédé selon la revendication 13, caractérisé en ce que la formulation contient des vitamines non-thermolabiles.

## Patentansprüche

1. Verfahren zur Herstellung eines Getränks auf Basis von pflanzlichen Extrakten, dadurch gekennzeichnet, daß das pflanzliche Ausgangsprodukt, zweckmäßig getrocknet oder geröstet, den folgenden Verfahrensschritten unterzogen wird:

    1) Mikronisieren des pflanzlichen Produkts durch Zermalmen desselben infolge der Zerfaserung der Gewebestruktur zur Gewinnung eines Pulvers, das aus Teilchen sehr geringer Korngröße gebildet ist;

2) Luftsichten des Pulvers zur Gewinnung einer Untergruppe von das Pulver bildenden Teilchen entsprechend ihren physikalischen Eigenschaften und somit Entfernen einer Fraktion, z.B. von Zelluloseteilchen, mit geringerem spezifischen Gewicht;

3) Dispergieren der Teilchen in einem geeigneten Lösungsmittel unter Druck zur Durchführung der Extraktion der aromatischen Grundbestandteile des pflanzlichen Produkts;

4) Zentrifugieren der im vorherigen Schritt erhaltenen Dispersion und Abtrennung der erhaltenen Flüssigkeit von den ausgelaugten Elementarteilchen;

5) Mischen der im vorherigen Schritt erhaltenen Flüssigkeit mit einer Bindeflüssigkeitsformulierung;

6) Sterilisieren der im vorherigen Schritt erhaltenen Mischung.

2. Verfahren nach Anspruch 1, dadurch gekennzeichnet, daß zum Mikronisieren des pflanzlichen Produkts ein Schlagbrechverfahren verwendet wird.

3. Verfahren nach Anspruch 1, dadurch gekennzeichnet, daß im Luftsichtungsschritt einige Fraktionen von Teilchen mit unterschiedlichen physikalischen Eigenschaften von den anderen abgetrennt und entfernt werden.

4. Verfahren nach Anspruch 1, dadurch gekennzeichnet, daß die Zentrifugation bei im wesentlichen reduzierter Geschwindigkeit durchgeführt wird.

5. Verfahren nach Anspruch 4, dadurch gekennzeichnet, daß die Rotationsgeschwindigkeit ein paar Tausend Umdrehungen pro min beträgt.

6. Verfahren nach Anspruch 1, dadurch gekennzeichnet, daß sich die von der Zentrifugation erhaltene Flüssigkeit leicht vom Bodensatzkörper trennt, welcher sich aus den ausgelaugten Elementarteilchen des Ausgangsprodukts zusammensetzt.

7. Verfahren nach Anspruch 1, dadurch gekennzeichnet, daß die Extraktion der aromatischen Grundbestandteile in einem Autoklaven durchgeführt wird.

8. Verfahren nach Anspruch 1, dadurch gekennzeichnet, daß das zum Extrahieren der aromatischen Grundbestandteile unter Druck verwendete Lösungsmittel Wasser ist.

9. Verfahren nach Anspruch 8, dadurch gekennzeichnet, daß die Extrakion der aromatischen Grundstoffe mittels Wasser in einem Autoklaven bei einer Temperatur von mehr als 100°C stattfindet.

10. Verfahren nach Anspruch 1, dadurch gekennzeichnet, daß die am Ende des Zentrifugierschritts erhaltene Flüssigkeit Kaffee ist.

11. Verfahren nach Anspruch 10, dadurch gekennzeichnet, daß der Kaffee mit Milch gemischt ist.

12. Verfahren nach Anspruch 11, dadurch gekennzeichnet, daß die Milch in natürlicher oder pulverisierter und aufbereiteter Form vorliegt.

13. Verfahren nach Anspruch 10, dadurch gekennzeichnet, daß der Kaffe mit einer Formulierung auf Basis von Milchproteinen gemischt ist.

14. Verfahren nach Anspruch 13, dadurch gekennzeichnet, daß die Formulierung auf Basis von Milchproteinen eine Formulierung, zusammengesetzt aus Natriumkaseinat, Lipiden, Zuckern, Verdickungs- oder Suspensionsmitteln, ist.

15. Verfahren nach Anspruch 13, dadurch gekennzeichnet, daß die Formulierung nichtthermolabile Vitamine enthält.

Fig. 1

Fig. 2

Fig. 3

Fig. 4

Fig.4a

Fig.3a

Fig. 5

Fig. 6

Fig.6a

Fig.5a